(19) Europäisches Patentamt
European Patent Office
Office européen des brevets

(11) **EP 4 151 954 A1**

(12) **EUROPEAN PATENT APPLICATION**

(43) Date of publication:
**22.03.2023 Bulletin 2023/12**

(21) Application number: **21197312.8**

(22) Date of filing: **17.09.2021**

(51) International Patent Classification (IPC):
**G01D 5/20** (2006.01)

(52) Cooperative Patent Classification (CPC):
**G01D 5/2026; G01D 5/204; G01D 5/206**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Scania CV AB**
**151 87 Södertälje (SE)**

(72) Inventors:
• **NELSON, Oscar**
**131 34 Nacka (SE)**
• **OLAUSSON, Mats**
**151 96 Enhörna (SE)**
• **STAHRBERG, Casper**
**752 35 Uppsala (SE)**
• **PALLIN, Oscar**
**753 31 Uppsala (SE)**

(74) Representative: **Scania CV AB**
**Patents, GP 117kv**
**151 87 Södertälje (SE)**

(54) **SENSOR ARRANGEMENT FOR DETERMINING AN ANGULAR POSITION OF A SHAFT IN A VEHICLE**

(57)    The present disclosure relates to a sensor arrangement for determining an angular position of a shaft in a vehicle. According to a first aspect, this disclosure proposes a sensor arrangement 1, for determining an angular position of a shaft 4 in a vehicle, wherein the sensor arrangement comprises a stationary part 2 configured to emit an excitation signal, and a rotating part 3 configured to be attached to the shaft. The rotating part 2 comprises a circuit board having a plurality of measurement circuits 31 formed thereon, whereby each measurement circuit 31 form a filter circuit. The measurement circuit is arranged to be excited by the excitation signal and to emit a reflection of the excitation signal, with maximum power reflection at a maximum passing frequency of the filter circuit. The maximum passing frequency of the measurement circuit is tuned based on a frequency of the excitation signal. The disclosure also relates to a vehicle comprising the sensor arrangement 1.

Fig. 2

EP 4 151 954 A1

**Description**

Technical field

The present disclosure relates to a sensor arrangement for determining an angular position of a shaft in a vehicle. In particular, the disclosure relates to a sensor arrangement with a rotating part comprising a plurality of measurement circuits formed on a circuit board. The disclosure also relates to a vehicle comprising the sensor arrangement.

Background

In electrical vehicles, accurate sensing of rotor position is a key feature to perform accurate and efficient control of the electric machine. More specifically, a rotor position sensor (also referred to as resolver) is a vital component of the electrical machine as it acts as the eyes of the Motor Generator Unit, MGU, also called inverter, and is used for controlling the torque of the electrical machine. Hence, any inaccuracy in the rotor position sensor will have a direct impact on the driveline efficiency.

Today's rotor position sensors (e.g. inductive eddy-current type) relies on a stationary part (also referred to as the sensor or stator) and a rotating part (also referred to as the target or rotor). The stationary part is typically an overmoulded Printed Circuit Board, PCB, and constitutes an active part of the rotor position sensor. The stationary part is connected to the MGU. The rotating part is traditionally an electrically passive component, such as a rotating aluminum tooth wheel or metal sheets formed in a round circuit board. The rotating part is mounted to a shaft of the electrical machine at a specific distance from the stationary part.

More specifically, the stationary part transmits an excitation signal which is reflected back by the rotating part. The characteristics of the reflected signal will depend on an angular position of the shaft. The stationary part processes the feedback from the rotor and transmits the angular position to the MGU.

Challenges that this solution faces are related to sensor accuracy, complexity, and mechanical deviations of the target. For example, the reflected signal may be distorted by interference caused for example by an electrical field of the electrical machine. Also, because the rotor part is typically a passive part, it may be difficult to control what signals are actually reflected back to the stator. This may affect sensor accuracy. A low signal to noise ratio typically increases need for complex post-processing. Hence, there is a need for improved rotor position sensors with simple design and high accuracy.

Summary

It is an object of the disclosure to alleviate at least some of the drawbacks with the prior art. Thus, it is an object to provide a rotor position sensor with simple design and high accuracy.

According to a first aspect, this disclosure proposes a sensor arrangement, for determining an angular position of a shaft in a vehicle, wherein the sensor arrangement comprises a stationary part configured to emit an excitation signal, and a rotating part configured to be attached to the shaft. The rotating part comprises a circuit board having a plurality of measurement circuits formed thereon. Each measurement circuit comprises an inductor arranged to be excited by the excitation signal emitted by the stationary part and one or more electrical components coupled to the inductor, whereby the measurement circuit also form a filter circuit. The measurement circuit is arranged to be excited by the excitation signal and to emit a reflection of the excitation signal, with maximum power reflection at a maximum passing frequency of the filter circuit. The maximum passing frequency of the filter circuit is tuned based on a frequency of the excitation signal. The stationary part is configured to receive the reflection of the excitation signal which represents the angular position of the shaft. As the measurement circuit passes the excitation signal and attenuates other frequencies, relative amplification of the reflected signal is achieved. Hence, the proposed solution increases integrity of the reflected signal. In this way detection of the reflection is facilitated, which contributes to less complex post-processing and higher sensor accuracy.

In some embodiments, the measurement circuits are tuned such that the maximum passing frequencies falls within an interval of 80-120% of the excitation signal frequency. Using a tuning interval may be beneficial, for example due to temperature changes around the application, which may cause the frequencies to drift by a few percent. Also, an exact match may be difficult to achieve due to hardware limitations.

In some embodiments, the filter circuit is a resonance circuit and wherein the measurement circuit is configured to emit a reflection of the excitation signal with maximum power reflection at a resonance frequency of the resonance circuit. This embodiment offers a simple design, tuning and manufacturing.

In some embodiments, the measurement circuits are tuned such the maximum passing frequencies of the measurement circuits and a frequency of the excitation signal are equal. At equal frequencies, or substantially equal frequencies, attenuation of the reflected signal in relation to surrounding noise is optimized.

In some embodiments, the one or more electrical components comprise at least one capacitor. The capacitance of the at least one capacitor is selected such that the maximum passing frequency of the filter circuit is tuned to match a frequency of the excitation signal. Hence, one way to tune the frequencies to match is to adapt the size of the one or more capacitors.

In some embodiments, the one or more electrical components comprises at least one resistor. The resistance of the at least one resistor is selected such that a pass band of the measurement circuit comprises a frequency of the excitation signal. Hence, the one or more resistors may be selected to tune the pass band to overlap with the excitation signal frequency.

In some embodiments, the measurement circuits form band pass filters and wherein the band pass filters are tuned such that the frequency of the excitation signal coincides with a pass band of the bandpass filter. By widening the bandwidth, a less exact matching between the excitation signal and the maximum passing frequency is required.

In some embodiments, the measurement circuits comprise one or more of serial LC-filters, parallel LC-filters, a serial RLC-filters, and a parallel RLC-filters. The possibility to work with the inductance as well as the capacitance parameters of the rotating part enables a solution where the rotating part filters away any noise which may occur when using for example an aluminum target. The RLC and LC-circuits may therefore be described as passive filters enhancing the signal integrity and thereby improving the sensor accuracy.

In some embodiments, the inductors comprise metal traces formed in the circuit board. The metal traces do, compared to an aluminum target wheel, not require any compromises from mechanical tooling such as minimum bend radius for milling tool or similar. The traces can be made with almost sharp bends resulting in little to no compensation inside the sensor which further improves sensor accuracy. Furthermore, the traces formed in the circuit board enables better modularity between different installations as the same circuit board shape can be reused by electrical machines with different amount of pole pairs, since the number of measurement circuits can be adapted to match the number of pole pairs of the individual electrical machines.

In some embodiments, the circuit board is a rotating circular board and wherein a plurality of measurement circuits are symmetrically distributed between individual angle segments of the rotating circular circuit board. This design enables accurate determination of the angle position.

In some embodiments, the rotating circuit board has a smooth edge. A smooth edge free from tooth reduces splash effects in the system caused by oil present in the driveline, which may cause rotational losses. The smooth edge also facilitate manufacturing.

In some embodiments, the shaft is a rotor shaft of an electrical machine and wherein a count of measurement circuits corresponds to the number of pole pairs of the electrical machine. Thereby, the feeding current to the electrical machine can be accurately controlled at each pole pair, while optimal accuracy is achieved.

In some embodiments, the circuit board and the measurement circuits are over molded by a plastic material. Thereby, the circuits are protected from damage.

According to a second aspect, the disclosure relates to a vehicle comprising the sensor arrangement.

Brief description of the drawings

    Fig. 1 illustrates a sensor arrangement arranged on a shaft.
    Fig. 2 illustrates a measurement circuit of the sensor arrangement in Fig. 2 in more detail.
    Fig. 3 is a circuit diagram of a sensor arrangement.
    Fig. 4 illustrates the frequency response of a measurement circuit in some example embodiments.

Detailed description

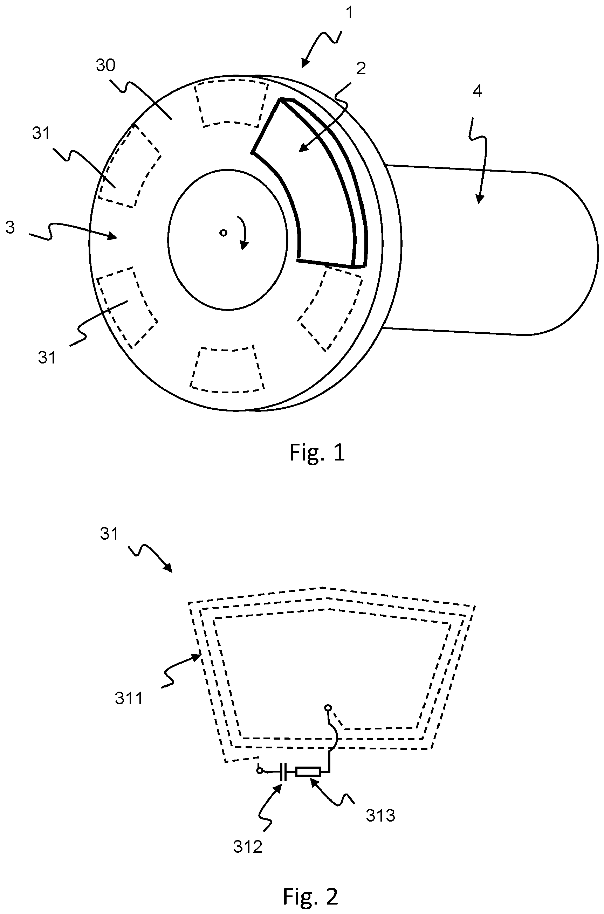

The proposed technique relates to a sensor arrangement comprising a PCB-type target wheel with implemented traces corresponding to a "tooth" shape of a traditional aluminum target wheel. The traces are combined with filter circuits that are finetuned for reflecting signals back to the sensor within a certain frequency span. In this way signal quality of the reflected signal is enhanced and consequently sensor accuracy may be improved. The proposed technique will now be described with reference to Figs. 1-4.

Fig. 1 illustrates a sensor arrangement 1 arranged on a shaft 4 of a vehicle. The vehicle may comprise a means for transportation in broad sense and is for example a bus, a truck, or other similar manned or unmanned vehicle. In particular the vehicle comprise an electrical vehicle and the shaft 4 comprises a rotor shaft of an electrical engine.

The sensor arrangement 1, also referred to as the position sensor arrangement, is adapted to determine an angular position of the shaft 4. The sensor arrangement 1 comprises a stationary part 2 and a rotating part 3 configured to be attached to the shaft 4.

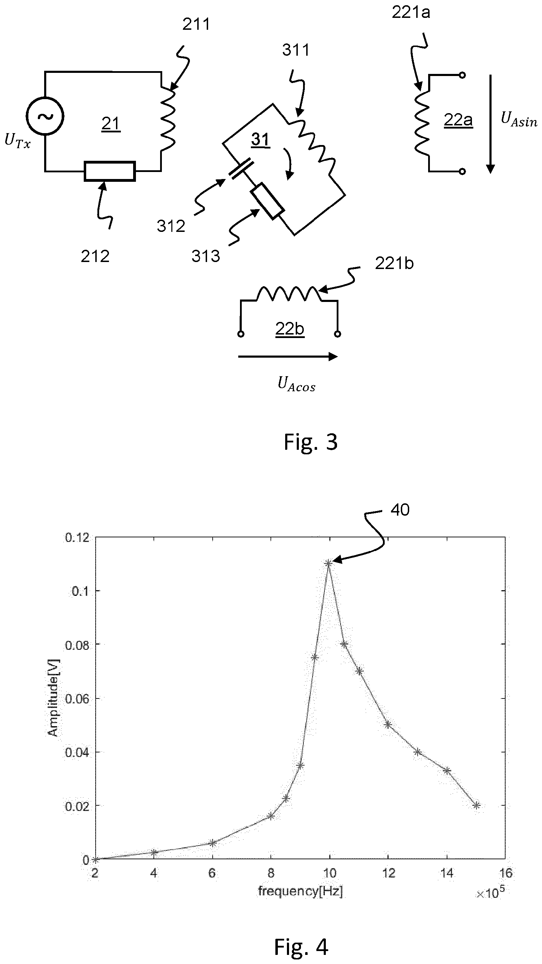

The stationary part 2 is stationary in relation to the vehicle, for example in relation to a stator of an electrical engine of the vehicle. The stationary part 2 is configured to emit an electromagnetic signal, herein referred to as an excitation signal, and to receive a reflection of the excitation signal which represents the angular position of the shaft 4. For example, the stationary part 2 may comprise a transmit circuit and a receive circuit. The transmit circuit and the receive circuit may be arranged in a housing. In some embodiments, the stationary part 2 is in communication with the MGU, which in turn is configured to control a torque and/or speed operation of the electric machine using the calibrated reference angle as derived from the unmodulated sine/cosine signals from the sensor assembly. The circuitry of the stationary part 2 is described in further detail in Fig. 3.

The rotating part 3 is configured to be attached to the shaft 4. The stationary part 2 and the rotating part 3 are arranged such that electromagnetic power transfer in-between varies over a revolution of the shaft 4. For example, the rotating part 3 is arranged around the shaft 4. The rotating part 3 comprises a circuit board 30 having a plurality of measurement circuits 31 formed thereon. The circuit board is for example a printed circuit board, PCB. The measurement circuits 31 are configured to reflect the excitation signal. The measurement circuits 31 are evenly distributed along the circuit board 30 in a direction corresponding to a rotational movement of the circuit board 30. Thereby, the power of the reflected signal varies over one revolution of the shaft 4 and reaches its maximum each time the stationary part 2 is aligned with one measurement circuit 31. The number or count of measurement circuits 31 typically corresponds to the number of pole pairs of the electrical machine. As an electrical machine is typically symmetric, all the measurement circuits 31 are typically identically designed, even if some deviations may occur for example in manufacturing.

In the illustrated embodiments the circuit board is a rotating circular board with a rotation axis aligned with a rotation axis of the shaft. Hence, the measurement circuits 31 are symmetrically distributed between individual angle segments of the rotating circular circuit board. The rotating circuit board 30 has a smooth edge. In other words, the edge of the board is free from notches and corners. In some embodiments, the circuit board 30 and the measurement circuits 31 are over molded by a plastic material. The circuitry of the rotating part 3 is described in further detail in Fig. 3.

Fig. 2 illustrates one measurement circuit 31 of the sensor arrangement 1 in Fig. 2 in more detail. The measurement circuit 31 comprises an inductor 311 and one or more electrical components 312, 313. In the illustrated embodiment the one or more electrical components comprise a capacitor 312 with capacitance $C_T$ and a resistor 313 with resistance $R_T$.

The inductor 311 is arranged to be excited by the excitation signal emitted by the stationary part 2. In the illustrated embodiment, the inductor 311 comprises metal traces formed in the circuit board 30. In alternative embodiments, the inductor may be formed by a coil or any other suitable component.

The one or more electrical components 312, 313 are coupled to the inductor 311. In the illustrated embodiment, the inductor 311 and the one or more electrical components are serially connected. The inductor 311 and the one or more electrical components 312, 313 form a filter circuit. It must be appreciated that in alternative embodiments other combinations of components may be used to form the filter circuit, for example the resistor may be omitted.

The measurement circuit 31 is arranged to be excited, i.e. inductively driven, by the excitation signal transmitted by the stationary part 2. The measurement circuit 31 is also arranged to emit a reflection of the excitation signal with maximum power reflection at a maximum passing frequency of the filter circuit. The maximum power reflection is defined as the maximum transfer for a given excitation power. The maximum passing frequency is for example measured based on energy transfer measured in decibel, or volt (for a given current). Stated differently, ability of the measurement circuit 31 to reflect power back to the stationary part is best at the maximum passing frequency. In other words, the maximum passing frequency is a frequency where the resistance or damping of the filter circuit is at a minimum. Typically, the filter circuit passes frequencies at and around the maximum passing frequency and attenuates at least some other frequencies.

The filter circuit is designed such that the maximum passing frequency 40 (Fig. 4) occurs at about the same frequency as that of the excitation signal. In this way the reflection of the excitation signal will be amplified in relation to reflections of other (unwanted) signals (i.e. interference and noise), which will increase detectability of the reflected signal. Hence, the measurement circuit 31 acts as a passive filter that enhances the signal quality and improves the sensor accuracy. In other words, the maximum passing frequency 40 of the filter circuit is tuned based on a frequency of the excitation signal.

The filter may be designed in different ways. For example, resonant circuits are often used as filters. In other words, in some embodiments, the filter circuit is a resonance circuit and the measurement circuit 31 is configured to emit a reflection of the excitation signal with maximum power reflection at a resonance frequency of the resonance circuit. However, the disclosure is not limited thereto.

In the illustrated embodiment the filter circuit is an RLC-circuit. An RLC circuit (or LCR circuit) is an electrical circuit comprising a resistor, an inductor, and a capacitor, connected in series or in parallel. The RLC part of the name is due to those letters being the usual electrical symbols for resistance, inductance, and capacitance respectively. In a resonance circuit, resonance occurs because the collapsing magnetic field of the inductor 311 generates an electric current in its windings that charges the capacitor 312, and then the discharging of the capacitor 312 provides an electric current that re-builds the magnetic field of the inductor 311. In alternative embodiments the resonance circuit comprises one or more of serial LC-filter, parallel LC-filter, or a parallel RLC-filter. In principle any suitable filter design may be deployed.

The resonance frequency of a LC- or RLC-circuit is defined as the frequency at which the impedance of the circuit is at a minimum, whereby the magnetic field reaches its maximum value. The resonant frequency of a serial LC- or RLC-circuit has the value

$$f = \frac{1}{2\pi\sqrt{L_T C_T}}. \qquad\qquad (1)$$

At the resonance frequency the RLC-filter oscillate with minimal damping, so the resistance is as low as possible. Thus, the resonance frequency corresponds to the maximum passing frequency of the RLC-filter. Hence, in some embodiments the measurement circuit 31 forms a resonant circuit configured to emit a reflection of the excitation signal with maximum power reflection at a resonant frequency $f$ of the filter circuit.

In the illustrated example, the tuning of the excitation signal and the filter circuit is achieved by tuning the capacitance $C_T$ of the measurement circuit such that the resonance frequency of the LC-circuit equals the frequency of the excitation signal, with some tolerance margin. For example, a desired capacitance $C_T$ may be obtained by connecting a few capacitors 312 in series. In some embodiments, the measurement circuits 31 of the rotating part 3 are tuned such that the resonance frequencies falls within an interval of 80-120% of the excitation signal frequency. In other words, in some embodiments, the capacitance of the at least one capacitor 312 is selected such that the resonant frequency of the measurement circuit 31 is tuned to match a frequency of the excitation signal.

The filter circuit can be a band-pass filter, band-stop filter, low-pass filter, or highpass filter, depending on what frequencies shall be removed. In this implementation the purpose is to detect the excitation signal, why a band pass filter may be feasible. In other words, in some embodiments the measurement circuit 31 form band pass filter. The band pass filters are tuned such that the frequency of the excitation signal coincides with a pass band of the bandpass filter. A passband is the range of frequencies that can pass through a filter. For example, the pass band comprises frequencies where the attenuation is below a certain value. The filter also comprises a stop band where attenuation is above the certain value, such as 10dB attenuation in relation to the maximum passing frequency. Attenuation is for example measured in dB or volt. The frequencies of the pass band are also referred to as passing frequencies and the attenuated frequencies are referred to as stop frequencies. The width of the band pass filter may be tuned by altering the resistance of the RLC circuit. In other words, in some embodiments, the at least one resistor 313 is selected such that a pass band of the measurement circuit 31 overlaps with a frequency of the excitation signal. In other words, the at least one resistor 313 is selected such that a pass band of the measurement circuit 31 coincides with, or includes, a frequency of the excitation signal.

Fig. 3 is a circuit diagram of an example sensor arrangement 1 of resolver type. A resolver is a type of rotary electrical transformer used for measuring degrees of rotation, which is commonly used in rotor position sensors. The sensor arrangement 1 comprises a transmit circuit 21 and two receive circuits 22a, 22b arranged in a stationary part 2 (Fig. 1) and a plurality of measurement circuits 31 arranged in the rotating part 3 (Fig. 1 and Fig. 2). For simplicity, only one measurement circuit 31 is illustrated.

The transmit circuit 21 comprises an excitation coil 211 and a resistor 212. The receive circuits 22a, 22b comprises two diphased receive coils 221a, 221b, fixed at right (90°) angles to each other. The illustrated measurement circuit 31 comprises an inductor 311, a capacitor 312 and a resistor 313, as described above in Fig. 2.

The transmit circuit 21 is supplied with a voltage $U_{Tx}$ from which the excitation coil 211 generates an electromagnetic output signal, herein referred to as an excitation signal. The excitation signal is received and reflected by the measurement circuit 31 formed in the rotating part 3, as described in Fig. 2. The reflected signal induces a sine and cosine voltage in the receive coils 221a, 221b of the receive circuits 22a, 22b.

The angular position of the shaft 4 can be detected by analyzing amplitude changes in voltages $U_{Asin}$, $U_{Acos}$ induced in the receive coils 221a, 221b. The analyzing is performed by post-processing in the stationary part 2 before the signal is forwarded to for example the MGU, which controls the electrical machine. More specifically, the induced voltages $U_{Asin}$, $U_{Acos}$ are equal to the value of a reference voltage multiplied by the SIN or COS of the angle of the input shaft from a fixed zero point. Thus, the receive circuits 22a, 22b provides two voltages $U_{Asin}$, $U_{Asin}$ whose ratio represents an absolute position of the input shaft. (*SIN θ / COS θ = TAN θ*, where $θ$ = shaft angle). Since the principle of the resolver device is well known, the detailed description of this content will be omitted.

Fig. 4 illustrates the frequency response of a measurement circuit 31 comprising an RLC-circuit with a resonance frequency of 10 Hz. More specifically, Fig. 4 illustrates that the relative attenuation of the reflected signal will be significantly higher around a maximum passing frequency 40, than at other frequencies. Simulations of how the attenuation varied (with different sizes of resistances), have revealed that the attenuation was at least around 12 dB in all cases.

The terminology used in the description of the embodiments as illustrated in the accompanying drawings is not intended to be limiting of the described method; control arrangement or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims.

**Claims**

1. A sensor arrangement (1), for determining an angular position of a shaft (4) in a vehicle, wherein the sensor arrangement (1) comprises a stationary part (2) configured to emit an excitation signal, and a rotating part (3) configured to be attached to the shaft (4), wherein the rotating part (3) comprises a circuit board (30) having a plurality of measurement circuits (31) formed thereon, wherein each measurement circuit (31) comprises:

   - an inductor (311) arranged to be excited by the excitation signal emitted by the stationary part (2), and
   - one or more electrical components (312, 313) coupled to the inductor (311) whereby the measurement circuit (31) form a filter circuit,
   wherein the measurement circuit (31) is arranged to be excited by the excitation signal and to emit a reflection of the excitation signal with maximum power reflection at a maximum passing frequency of the filter circuit where attenuation is at a minimum, wherein the maximum passing frequency of the measurement circuit (31) is tuned based on a frequency of the excitation signal and
   wherein the stationary part (2) is configured to receive the reflection of the excitation signal which represents the angular position of the shaft (4).

2. The sensor arrangement according to claim 1, wherein the filter circuit is a resonance circuit and wherein the measurement circuit (31) is configured to emit a reflection of the excitation signal with maximum power reflection at a resonance frequency of the resonance circuit.

3. The sensor arrangement according to claim 1 or 2, wherein the measurement circuits (31) are tuned such that the maximum passing frequencies falls within an interval of 80-120% of the excitation signal frequency.

4. The sensor arrangement according to any one of the preceding claims , wherein the measurement circuits (31) are tuned such the maximum passing frequencies of the measurement circuits (31) and a frequency of the excitation signal are equal.

5. The sensor arrangement according to any one of the preceding claims, wherein the one or more electrical components comprise at least one capacitor (312) and wherein capacitance of the at least one capacitor (312) is selected such that the maximum passing frequency of the filter circuit is tuned to match a frequency of the excitation signal.

6. The sensor arrangement according to any one of the preceding claims, wherein the one or more electrical components comprises at least one resistor (313) and wherein resistance of the at least one resistor (313) is selected such that a pass band of the measurement circuit (31) to comprise a frequency of the excitation signal.

7. The sensor arrangement according to any one of the preceding claims, wherein the measurement circuits (31) form band pass filters and wherein the band pass filters are tuned such that the frequency of the excitation signal coincides with a pass band of the bandpass filter.

8. The sensor arrangement according to any one of the preceding claims, wherein the measurement circuits (31) comprise one or more of serial LC-filters, parallel LC-filters, a serial RLC-filters, and a parallel RLC-filters.

9. The sensor arrangement according to any one of the preceding claims, wherein the inductors (311) comprise metal traces formed in the circuit board.

10. The sensor arrangement according to any one of the preceding claims, wherein the circuit board is a rotating circular board and wherein a plurality of measurement circuits (31) are symmetrically distributed between individual angle segments of the rotating circular circuit board.

11. The sensor arrangement according to claim 10, wherein the rotating circuit board (30) has a smooth edge.

12. The sensor arrangement according to any one of the preceding claims, wherein the shaft is a rotor shaft of an electrical machine and wherein a count of measurement circuits (31) corresponds to the number of pole pairs of the electrical machine.

13. The sensor arrangement according to any one of the preceding claims, wherein the circuit board (30) and the measurement circuits (31) are over molded by a plastic material.

14. A vehicle comprising the sensor arrangement according to any one of claims 1-13.

Fig. 1

Fig. 2

Fig. 3

Fig. 4

Europäisches Patentamt
European Patent Office
Office européen des brevets

# EUROPEAN SEARCH REPORT

Application Number

EP 21 19 7312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 884 238 A1 (CONTINENTAL TEVES AG & CO OHG [DE]) 17 June 2015 (2015-06-17) * Abstract, Desc. [0001]-[0046], Figs. 1-6 * | 1-14 | INV. G01D5/20 |
| X | EP 2 884 236 A1 (CONTINENTAL TEVES AG & CO OHG [DE]) 17 June 2015 (2015-06-17) * Abstract, claims 1-3 , Figs. 3-5 * | 1 | |
| X | US 2011/101968 A1 (BRANDS ROBERT [DE] ET AL) 5 May 2011 (2011-05-05) * Abstract, Desc. [0003]-[0006], Figs. 1-2 * | 1 | |
| X | US 2009/224751 A1 (BUDDE WOLFRAM [DE] ET AL) 10 September 2009 (2009-09-10) * Abstract, Desc. [0003]-[0005], Fig. 2 * | 1 | |
| X | EP 2 884 237 A1 (CONTINENTAL TEVES AG & CO OHG [DE]) 17 June 2015 (2015-06-17) * Abstract, Desc. [0001], [0017]-[0046], Figs. 1-5 * | 1 | TECHNICAL FIELDS SEARCHED (IPC) G01D |

The present search report has been drawn up for all claims

| Place of search | Date of completion of the search | Examiner |
|---|---|---|
| Munich | 24 February 2022 | Reim, Klaus |

**EP 4 151 954 A1**

## ANNEX TO THE EUROPEAN SEARCH REPORT
## ON EUROPEAN PATENT APPLICATION NO.

EP 21 19 7312

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2022

| Patent document cited in search report | Publication date | Patent family member(s) | Publication date |
|---|---|---|---|
| EP 2884238 A1 | 17-06-2015 | DE 102013225918 A1<br>EP 2884238 A1 | 18-06-2015<br>17-06-2015 |
| EP 2884236 A1 | 17-06-2015 | DE 102013225921 A1<br>EP 2884236 A1 | 02-07-2015<br>17-06-2015 |
| US 2011101968 A1 | 05-05-2011 | EP 2257769 A1<br>ES 2553890 T3<br>US 2011101968 A1<br>WO 2009118042 A1 | 08-12-2010<br>14-12-2015<br>05-05-2011<br>01-10-2009 |
| US 2009224751 A1 | 10-09-2009 | EP 1960740 A1<br>US 2009224751 A1<br>WO 2007068765 A1 | 27-08-2008<br>10-09-2009<br>21-06-2007 |
| EP 2884237 A1 | 17-06-2015 | DE 102013225874 A1<br>EP 2884237 A1 | 18-06-2015<br>17-06-2015 |

EPO FORM P0459

For more details about this annex : see Official Journal of the European Patent Office, No. 12/82

11